# EUROPEAN PATENT APPLICATION

(11) **EP 1 837 511 A1**
(43) Date of publication of application: **26.09.2007**
(21) Application number: 05822518.6
(22) Date of filing: 22.12.2005
(51) Int. Cl.: F02D 45/00, F02D 41/04, F02D 41/18, F02D 13/02

(54) **INTAKE AIR QUANTITY VARIATION DETECTING DEVICE**

(30) Priority: 11.01.2005 JP 2005004169; 17.02.2005 JP 2005041240
(71) Applicant: Toyota Jidosha Kabushiki Kaisha, Toyota-shi, Aichi 471-8571 (JP)
(72) Inventor: NAKASAKA, Yukihiro, c/o TOYOTA JIDOSHA K. K., Toyota-shi, Aichi 471-8571 (JP)
(74) Representative: TBK-Patent
(86) International application number: PCT/JP2005/024172
(87) International publication number: WO 2006/075531

(57) **Abstract**

The present invention relates to a device for detecting intake air amount variations among cylinders of a multiple-cylinder internal combustion engine, and makes it possible to accurately detect the intake air amount variations among the cylinders. The fuel injection amount is either increased or decreased from the injection amount for stoichiometric operation to determine the amount of a resulting change in the torque or rotation speed. The determined amount of the torque or rotation speed change is then output as an index value that indicates the degree of intake air amount variations among the cylinders.

## Description

### Technical Field

The present invention relates to a detector for detecting intake air amount variations among cylinders of a multiple-cylinder internal combustion engine, and more particularly to the detector suitable for use in an internal combustion engine having a variable valve device that is capable of changing the operating angle and lift amount of an intake valve.

### Background Art

A conventionally known internal combustion engine includes a variable valve device that is capable of varying the operating angle and lift amount of the intake valve. This type of internal combustion engine can control an intake air amount by varying the operating angle and lift amount of the intake valve without using a throttle valve. In this instance, no negative pressure arises within an intake pipe. Therefore, the pumping loss of the internal combustion engine can be reduced.

In the internal combustion engine having the variable valve device, however, the intake air amount is determined by the operating angle and lift amount. Therefore, if the operating angle and lift amount vary among the cylinders, the intake air amount may also vary among the cylinders. The influence of the operating angle and lift amount variations upon the intake air amount variations is significant particularly when the intake air amount is small due to a small operating angle and small lift amount. Excessive variations in the intake air amount may vary the internal combustion engine torque or deteriorate the exhaust emission. Therefore, it is demanded that the internal combustion engine having the variable valve device detect intake air amount variations among the cylinders and adjust the operating angle and lift amount for each cylinder until the variations are within a permissible range.

A conceivable method for detecting the intake air amount variations among the cylinders is to detect the combustion state of each cylinder and determine the combustion state variations among the cylinders. A method for detecting the combustion state variations among the cylinders is disclosed, for instance, by Japanese Patent No. 2831483. Another conceivable method is to detect the amount of an intake pipe negative pressure change in each cylinder, the air-fuel ratio of each cylinder, or the combustion pressure in each cylinder, and determine the intake air amount variations among the cylinders from the detected data.

Including the above-mentioned document, the applicant is aware of the following documents as a related art of the present invention.
[Patent Document 1]
Japanese Patent No. 2831483
[Patent Document 2]
Japanese Patent Laid-open No. Hei 4-299084
[Patent Document 3]
Japanese Patent Laid-open No. 2004-176689
[Patent Document 4]
Japanese Patent Laid-open No. Hei 5-156979

### Disclosure of Invention

However, the detection methods enumerated above cause a significant measurement error at the time of detection. Therefore, it is difficult to accurately detect the intake air amount variations among the cylinders when the above methods are used. If the intake air amount variations among the cylinders are not accurately determined, the intake valve's operating angle and lift amount cannot be accurately adjusted for each cylinder.

The present invention has been made to solve the above problem. It is an object of the present invention to provide an intake air amount variation detector that is capable of accurately detecting the intake air amount variations among the cylinders.

In accomplishing the above object, according to a first aspect of the present invention, there is provided a device for detecting the intake air amount variations among cylinders of a multiple-cylinder internal combustion engine, the device comprising: injection amount control means for changing a fuel injection amount from an injection amount for stoichiometric operation to either an increased amount or a decreased amount; computation means for determining the amount of a torque or rotation speed change that occurs when the fuel injection amount is changed by the injection amount control means; and output means for outputting the torque or rotation speed change amount determined by the computation means as an index value that indicates the degree of intake air amount variations among the cylinders.

If the fuel injection amount is increased or decreased from the injection amount for stoichiometric operation in a situation where the intake air amount varies among the cylinders, the torque or rotation speed changes in accordance with the degree of intake air amount variations. The first aspect of the present invention can accurately detect the intake air amount variations among the cylinders because it outputs the amount of a torque or rotation speed change, which occurs when the fuel injection amount is changed, as an index value that indicates the degree of intake air amount variations among the cylinders.

According to a second aspect of the present invention, there is provided the device as described in the first aspect, the device further comprising:
comparison means for comparing a predetermined reference value with the amount of a change that occurs when the injection amount control means increases the fuel injection amount from the injection amount for stoichiometric operation; and judgment means, which, when the amount of the change is greater than the reference value, judges that a permissible level is exceeded by the intake air amount variations among the cylinders.

According to the second aspect of the present invention, when the fuel injection amount is increased from the injection amount for stoichiometric operation, the torque remains unchanged in cylinders in which the intake air amount is appropriate or insufficient. However, a torque change occurs in cylinders in which the intake air amount is excessive. Therefore, when the predetermined reference value is compared with the amount of a torque or rotation speed change that occurs when the fuel injection amount is increased from the injection amount for stoichiometric operation, it is possible to accurately judge whether the permissible level is exceeded by the intake air amount variations among the cylinders.

According to a third aspect of the present invention, there is provided the device as described in the first aspect, the device further comprising:
comparison means for comparing a predetermined reference value with the amount of a change that occurs when the injection amount control means decreases the fuel injection amount from the injection amount for stoichiometric operation; and judgment means, which, when the amount of the change is smaller than the reference value, judges that a permissible level is exceeded by the intake air amount variations among the cylinders.

According to the third aspect of the present invention, when the fuel injection amount is decreased from the injection amount for stoichiometric operation, a certain torque change occurs in cylinders in which the intake air amount is appropriate or excessive. However, the amount of a torque change decreases in cylinders in which the intake air amount is insufficient. Therefore, when the predetermined reference value is compared with the amount of a torque or rotation speed change that occurs when the fuel injection amount is decreased from the injection amount for stoichiometric operation, it is possible to accurately judge whether the permissible level is exceeded by the intake air amount variations among the cylinders.

According to a fourth aspect of the present invention, there is provided the device as described in any one of the first to third aspects, wherein the injection amount control means periodically increases or decreases the fuel injection amount from the injection amount for stoichiometric operation by a predetermined amount; and wherein the computation means extracts a change component having the same frequency as a fuel injection amount change frequency from a torque or rotation speed change, and determines the amplitude of the extracted change component as the amount of the change.

The fourth aspect of the present invention periodically changes the fuel injection amount from the injection amount for stoichiometric operation and extracts a change component having the same frequency as the fuel injection amount change frequency from a torque or rotation speed change, thereby making it possible to accurately determine the degree of intake air amount variations no matter whether the internal combustion engine operation is in a steady state or transient state.

In accomplishing the above object, according to a fifth aspect of the present invention, there is provided a device for detecting the intake air amount variations among cylinders of a multiple-cylinder internal combustion engine, the device comprising: injection amount control means for changing a fuel injection amount for a particular one of the cylinders from an injection amount for stoichiometric operation to either an increased amount or a decreased amount; computation means for determining the amount of a torque or rotation speed change that occurs when the fuel injection amount for the particular cylinder is changed by the injection amount control means; and output means for outputting the torque or rotation speed change amount determined by the computation means as an index value that indicates the degree of intake air amount variation in the particular cylinder.

The fifth aspect of the present invention outputs the amount of a torque or rotation speed change, which occurs when the fuel injection amount for a particular cylinder is changed, as an index value that indicates the degree of intake air amount variation in the particular cylinder, thereby making it possible to accurately detect the intake air amount variation in the particular cylinder. When the intake air amount variation in each cylinder is detected, it is possible to accurately detect the intake air amount variations among the cylinders. Further, the fifth aspect of the present invention changes the fuel injection amount for a particular one of the cylinders, thereby making it possible to reduce the overall change in the fuel injection amount and suppress the change in the torque and air-fuel ratio.

According to a sixth aspect of the present invention, there is provided the device as described in the fifth aspect, the device further comprising:
comparison means for comparing a predetermined reference value with the amount of a change that occurs when the injection amount control means increases the fuel injection amount for the particular cylinder from the injection amount for stoichiometric operation; and
judgment means, which, when the amount of the change is greater than the reference value, judges that a permissible level is exceeded by an undue increase in the intake air amount in the particular cylinder.

The sixth aspect of the present invention increases the fuel injection amount for a particular cylinder from the injection amount for stoichiometric operation. If the intake air amount for the particular cylinder is appropriate or insufficient, the torque remains unchanged. However, if the intake air amount is excessive, the torque changes in accordance with the degree of intake air amount excessiveness. Therefore, when the predetermined reference value is compared with the amount of a torque or rotation speed change that occurs when the fuel injection amount for the particular cylinder is increased from the injection amount for stoichiometric operation, it is possible to accurately judge whether the permissible level is exceeded by the degree of intake air amount excessiveness for the particular cylinder.

According to a seventh aspect of the present invention, there is provided the device as described in the fifth aspect, the device further comprising:
comparison means for comparing a predetermined reference value with the amount of a change that occurs when the injection amount control means decreases the fuel injection amount for the particular cylinder from the injection amount for stoichiometric operation; and
judgment means, which, when the amount of the change is smaller than the reference value, judges that a permissible level is exceeded by an undue decrease in the intake air amount in the particular cylinder.

The seventh aspect of the present invention decreases the fuel injection amount for a particular cylinder from the injection amount for stoichiometric operation. If the intake air amount for the particular cylinder is appropriate or excessive, a certain torque change occurs. However, if the intake air amount is insufficient, the torque change decreases in accordance with the degree of intake air amount insufficiency. Therefore, when the predetermined reference value is compared with the amount of a torque or rotation speed change that occurs when the fuel injection amount for the particular cylinder is decreased from the injection amount for stoichiometric operation, it is possible to accurately judge whether the permissible level is exceeded by the degree of intake air amount insufficiency for the particular cylinder.

According to an eighth aspect of the present invention, there is provided the device as described in any one of the fifth to seventh aspects, wherein the injection amount control means periodically increases or decreases the fuel injection amount for the particular cylinder from the injection amount for stoichiometric operation by a predetermined amount; and wherein the computation means extracts a change component having the same frequency as a fuel injection amount change frequency for the particular cylinder from a torque or rotation speed change, and determines the amplitude of the extracted change component as the amount of the change.

The eighth aspect of the present invention periodically changes the fuel injection amount for a particular cylinder from the injection amount for stoichiometric operation and extracts a change component having the same frequency as the fuel injection amount change frequency from a torque or rotation speed change, thereby making it possible to accurately determine the degree of intake air amount variation in the particular cylinder no matter whether the internal combustion engine operation is in a steady state or transient state.

In accomplishing the above object, according to a ninth aspect of the present invention, there is provided a device for detecting the intake air amount variations among cylinders of a multiple-cylinder internal combustion engine, the device comprising: injection amount control means for changing a fuel injection amount from an injection amount for stoichiometric operation to either an increased amount or a decreased amount; computation means for determining, on an individual cylinder basis, the amount of a torque or rotation speed change that occurs when the fuel injection amount is changed by the injection amount control means; and output means for outputting the torque or rotation speed change amount determined by the computation means as an index value that indicates the degree of intake air amount variation in an individual cylinder.

The ninth aspect of the present invention determines the amount of a torque or rotation speed change that occurs when the fuel injection amount is changed, and outputs the determined change amount as an index value that indicates the degree of intake air amount variation in an individual cylinder, thereby making it possible to accurately detect the intake air amount variation in an individual cylinder. When the intake air amount variation in each cylinder is detected, it is possible to accurately detect the intake air amount variations among the cylinders. Further, the ninth aspect of the present invention can detect the intake air amount variation in each cylinder within a shorter period of time than when the fuel injection amount is changed on an individual cylinder basis.

According to a tenth aspect of the present invention, there is provided the device as described in the ninth aspect, the device further comprising:
comparison means for comparing, on an individual cylinder basis, a predetermined reference value with the amount of the change that occurs when the injection amount control means increases the fuel injection amount from the injection amount for stoichiometric operation; and
judgment means, which, when the amount of the change is greater than the reference value, judges that a permissible level is exceeded by an undue increase in the intake air amount in an individual cylinder.

According to the tenth aspect of the present invention, when the fuel injection amount is increased from the injection amount for stoichiometric operation, the torque remains unchanged in cylinders in which the intake air amount is appropriate or insufficient. In cylinders in which the intake air amount is excessive, however, a torque change occurs in accordance with the degree of intake air amount excessiveness. Therefore, when the amount of a torque or rotation speed change that occurs when the fuel injection amount is increased from the injection amount for stoichiometric operation is determined on an individual cylinder basis, and compared against the predetermined reference value, it is possible to accurately judge on an individual cylinder basis whether the permissible level is exceeded by the degree of intake air amount excessiveness.

According to an eleventh aspect of the present invention, there is provided the device as described in the ninth aspect, the device further comprising:
comparison means for comparing, on an individual cylinder basis, a predetermined reference value with the amount of the change that occurs when the injection amount control means decreases the fuel injection amount from the injection amount for stoichiometric operation; and
judgment means, which, when the amount of the change is smaller than the reference value, judges that a permissible level is exceeded by an undue decrease in the intake air amount in an individual cylinder.

According to the eleventh aspect of the present invention, when the fuel injection amount is decreased from the injection amount for stoichiometric operation, a certain torque change occurs in cylinders in which the intake air amount is appropriate or excessive. In cylinders in which the intake air amount is insufficient, however, the torque change decreases in accordance with the degree of intake air amount insufficiency. Therefore, when the amount of a torque or rotation speed change that occurs when the fuel injection amount is decreased from the injection amount for stoichiometric operation is determined on an individual cylinder basis, and compared against the predetermined reference value, it is possible to accurately judge on an individual cylinder basis whether the permissible level is exceeded by the degree of intake air amount insufficiency.

According to a twelfth aspect of the present invention, there is provided the device as described in any one of the ninth to eleventh aspects, wherein the injection amount control means periodically increases or decreases the fuel injection amount from the injection amount for stoichiometric operation by a predetermined amount; and wherein the computation means extracts a change component having the same frequency as a fuel injection amount change frequency from a torque or rotation speed change sampled on an individual cylinder basis, and determines the amplitude of the extracted change component as the amount of the change in an individual cylinder.

The twelfth aspect of the present invention periodically changes the fuel injection amount from the injection amount for stoichiometric operation and extracts a change component having the same frequency as the fuel injection amount change frequency from a torque or rotation speed change sampled on an individual cylinder basis, thereby making it possible to accurately determine the intake air amount variation in each cylinder no matter whether the internal combustion engine operation is in a steady state or transient state.

In accomplishing the above object, according to a thirteenth aspect of the present invention, there is provided a device for detecting the intake air amount variations among cylinders of a multiple-cylinder internal combustion engine, the device comprising: first injection amount control means for changing the fuel injection amount for a particular one of the cylinders from an injection amount for stoichiometric operation to an increased amount; first computation means for determining the amount of a torque or rotation speed change that occurs when the fuel injection amount for the particular cylinder is changed by the first injection amount control means; second injection amount control means, which, when the torque or rotation speed change amount determined by the first computation means is not greater than a predetermined reference value, decreases the fuel injection amount for the particular cylinder from the injection amount for stoichiometric operation; second computation means for determining the amount of a torque or rotation speed change that occurs when the fuel injection amount for the particular cylinder is changed by the second injection amount control means; and output means for outputting the torque or rotation speed change amount determined by the first computation means and the torque or rotation speed change amount determined by the second computation means as index values that indicate the degree of intake air amount variation in the particular cylinder.

The thirteenth aspect of the present invention determines the amount of a torque or rotation speed change that occurs when the fuel injection amount for a particular cylinder is increased from the injection amount for stoichiometric operation, and outputs the determined change amount as an index value that indicates the degree of intake air amount variation in the particular cylinder. If the reference value is not exceeded by the change amount, the thirteenth aspect of the present invention determines the amount of a torque or rotation speed change that occurs when the fuel injection amount for the particular cylinder is decreased from the injection amount for stoichiometric operation, and outputs the determined change amount as an index value that indicates the degree of intake air amount variation in the particular cylinder. This makes it possible to avoid a misfire that may occur when the intake air amount for the particular cylinder is excessive, and accurately detect the intake air amount variation in the particular cylinder.

According to a fourteenth aspect of the present invention, there is provided the device as described in any one of the fourth, eighth, and twelfth aspects, wherein the injection amount control means periodically changes the fuel injection amount at a frequency outside the range of human perception.

According to the fourteenth aspect of the present invention, even when the torque changes due to periodic changes in the fuel injection amount, the frequency of the resulting change is outside the range of human perception. Therefore, the fourteenth aspect of the present invention is at an advantage in that it does not make vehicle occupants feel uncomfortable or unpleasant.

According to a fifteenth aspect of the present invention, there is provided the device as described in any one of the first to fourteenth aspects, the device further comprising: conversion means for converting the intake air amount variations among the cylinders to intake valve operating angle variations among the cylinders and/or intake valve lift amount variations among the cylinders.

The fifteenth aspect of the present invention converts the intake air amount variations among the cylinders to intake valve operating angle variations among the cylinders and/or intake valve lift amount variations among the cylinders. Therefore, the fifteenth aspect of the present invention is at an advantage in that it makes it easy to correct the intake air amount variations.

### Brief Description of Drawings

Fig. 1 illustrates the configuration of an internal combustion engine to which an intake air amount variation detector according to a first embodiment of the present invention is applied.
Fig. 2 illustrates the relationship between the torque generated in the internal combustion engine and the in-cylinder air-fuel ratio.
Fig. 3 illustrates in-cylinder air-fuel ratio, torque, and rotation speed changes that occur in a cylinder in which the intake air amount is made excessive when the fuel injection amount is periodically increased from the injection amount for stoichiometric operation.
Fig. 4 illustrates in-cylinder air-fuel ratio, torque, and rotation speed changes that occur in a cylinder in which the intake air amount is made insufficient when the fuel injection amount is periodically increased from the injection amount for stoichiometric operation.
Fig. 5 is a flowchart illustrating an operating angle variation detection routine that is executed in the first embodiment of the present invention.
Fig. 6 illustrates the effect produced by a filter process that is performed by the routine shown in Fig. 5.
Fig. 7 is a flowchart illustrating an operating angle variation detection routine that is executed in a second embodiment of the present invention.
Fig. 8 is a flowchart illustrating an operating angle variation detection routine that is executed in a third embodiment of the present invention.
Fig. 9 illustrates in-cylinder air-fuel ratio, torque, and rotation speed changes that occur in a cylinder in which the intake air amount is made insufficient when the fuel injection amount is periodically decreased from the injection amount for stoichiometric operation.
Fig. 10 illustrates in-cylinder air-fuel ratio, torque, and rotation speed changes that occur in a cylinder in which the intake air amount is made excessive when the fuel injection amount is periodically decreased from the injection amount for stoichiometric operation.
Fig. 11 is a flowchart illustrating an operating angle variation detection routine that is executed in a fifth embodiment of the present invention.

### Best Mode of Carrying out the Invention

### First Embodiment

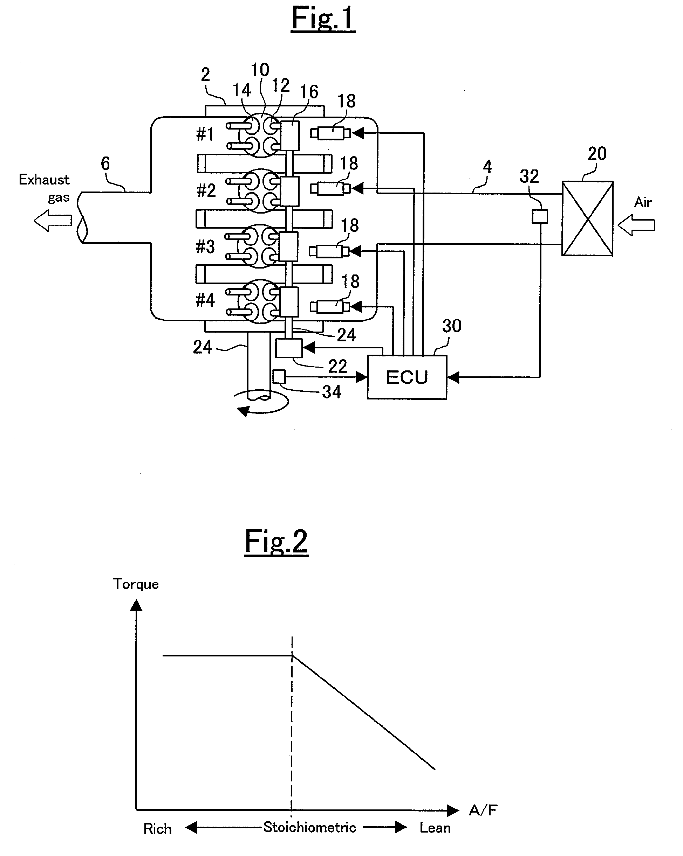

A first embodiment of the present invention will now be described with reference to Figs. 1 to 6.

Fig. 1 illustrates the configuration of an internal combustion engine to which an intake air amount variation detector according to the first embodiment of the present invention is applied. The internal combustion engine 2 according to the present embodiment is an inline four-cylinder engine, which has cylinders #1 to #4.

The internal combustion engine 2 has an intake path 4 for air introduction and an exhaust path 6 for combustion gas discharge. The upstream end of the intake path 4 is provided with an air cleaner 20. An air flow meter 32 is positioned immediately downstream of the air cleaner 20 to measure the intake air amount (air inflow amount per hour). The downstream end of the intake path 4 and the upstream end of the exhaust path 6 are both connected to combustion chambers 10 for cylinders #1 to #4. An injector 18 is provided each for cylinders #1 to #4 and positioned downstream of the intake path 4.

The joint between the combustion chamber 10 and intake path 4 is provided with an intake valve 12, which controls the communication between the combustion chamber 10 and intake path 4. The joint between the combustion chamber 10 and exhaust path 6 is provided with an exhaust valve 14, which controls the communication between the combustion chamber 10 and exhaust path 6. The intake valve 12 and exhaust valve 14 both open/close upon receipt of a driving force input from a camshaft (not shown). The intake valve 12 is especially provided with a variable valve device 16, which can vary the operating angle and lift amount of the intake valve 12. The variable valve device 16 is provided each for cylinders #1 to #4. The variable valve devices 16 are coupled via a common control shaft 24. When the control shaft 24 is rotated by an actuator (e.g., motor) 22, all the variable valve devices 16 are driven in an integrated fashion. The internal combustion engine 2 operates the actuator 22 in accordance with the operation of an accelerator pedal (not shown) and drives the variable valve device 16 to vary the operating angle and lift amount of the intake valve 12, thereby making it possible to control the intake air amount without using a throttle valve.

The structure of the variable valve device 16 is not limited. However, the variable valve device 16 may be configured as described below. A swing arm is positioned between the camshaft and intake valve 12. The swing arm swings in synchronism with the operation of a cam. The swing arm is incorporated in the internal combustion engine with a certain degree of freedom so that the basic angle relative to the intake valve 12 can be varied when the control shaft 24 rotates. If the control shaft 24 turns while the above configuration is employed, the reference relative angle between the swing arm and intake valve 12 varies. Such a relative angle variation varies the time interval between the instant at which the pressing force of the cam begins to be transmitted to the swing arm, that is, the swing arm begins to swing due to the action of the cam, and the instant at which the swing arm actually begins to push the intake valve 12 downward. Therefore, when the above configuration is employed, the operating angle and lift amount of the intake valve 12 can be varied by allowing the actuator 22 to control the rotary position of the control shaft 24.

The internal combustion engine 2 includes an ECU (Electronic Control Unit) 30 as its controller. The output end of the ECU 30 is connected to the aforementioned injector 18, variable valve device 16, and various other devices. The input end of the ECU 30 is connected to the aforementioned air flow meter 32, crank angle sensor 34, and various other sensors. The crank angle sensor 34 outputs a signal each time a crankshaft 28 rotates through a predetermined angle. In accordance with the outputs from various sensors, a predetermined control program causes the ECU 30 to drive various devices. Therefore, the ECU 30 also functions as the intake air amount variation detector according to the present invention.

The basic idea of intake air amount variation detection will now be described with reference to Figs. 2 to 4. Fig. 2 illustrates the relationship between the torque generated in the internal combustion engine and the in-cylinder air-fuel ratio (A/F ratio). If the air-fuel ratio is richer than the stoichiometric air-fuel ratio, virtually no torque change occurs in relation to the air-fuel ratio as indicated in Fig. 2. In other words, the sensitivity of the torque to the air-fuel ratio is low. The reason is that the fuel supplied in excess of a stoichiometric limit does not virtually contribute to the torque because it does not burn due to oxygen insufficiency. If, on the other hand, the air-fuel ratio is leaner than the stoichiometric air-fuel ratio, the torque greatly varies with the air-fuel ratio. Further, the leaner the air-fuel ratio, the smaller the torque. In other words, the sensitivity of the torque to the air-fuel ratio is high. The reason is that the supplied fuel entirely burns and that the torque is determined by the amount of burned fuel. The present invention detects the intake air amount variations among the cylinders by making use of the above-mentioned difference in the torque's sensitivity to the air-fuel ratio.

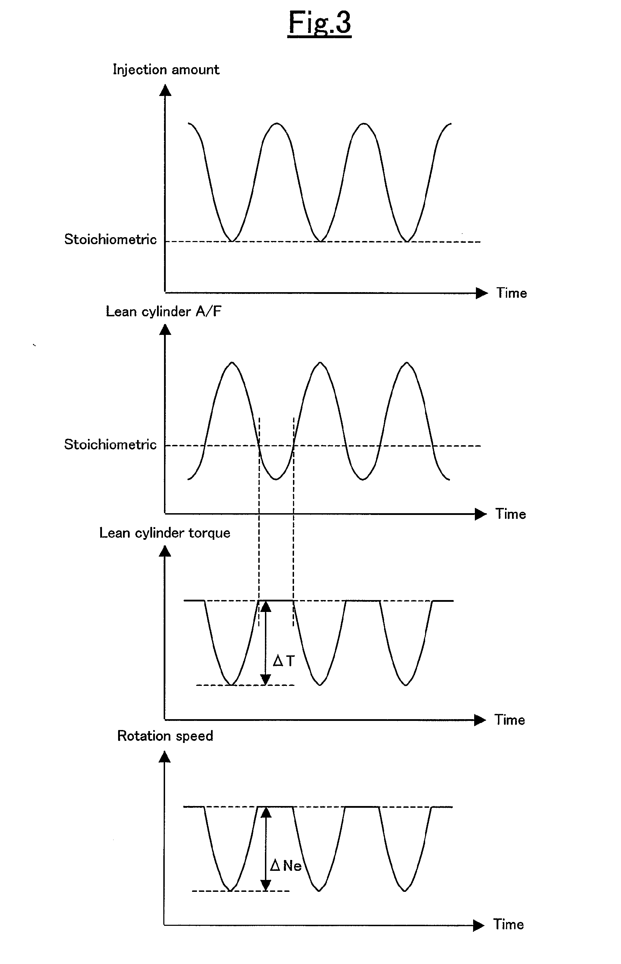

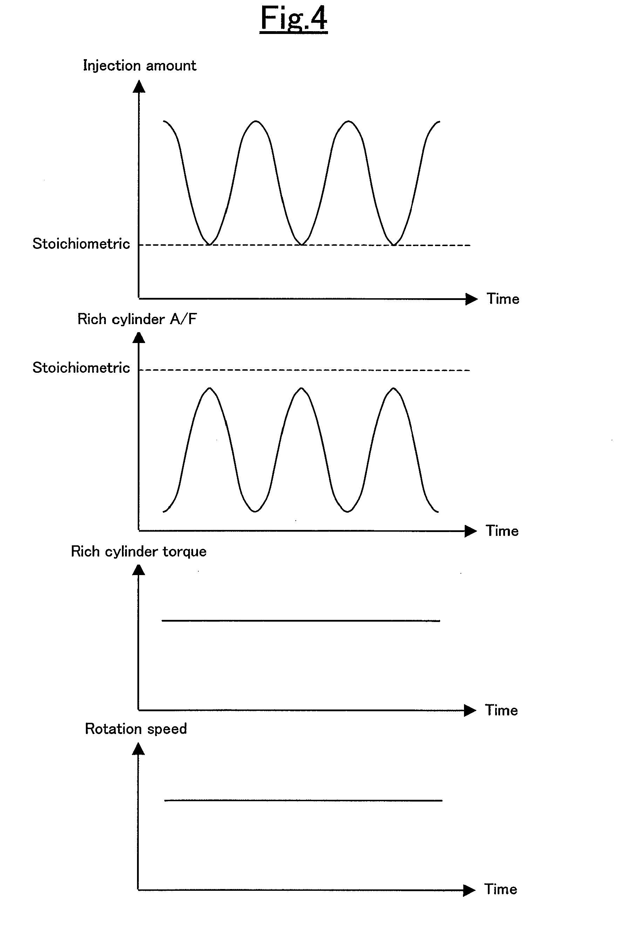

Figs. 3 and 4 illustrate in-cylinder air-fuel ratio, torque, and rotation speed changes that occur when the fuel injection amount is periodically increased from the injection amount for stoichiometric operation in an idle state. While the internal combustion engine 2 performs a stoichiometric operation, the overall air-fuel ratio prevailing in the internal combustion engine is stoichiometric. However, when the intake valve operating angle and lift amount vary among the cylinders, the intake air amount for some cylinders is larger than a standard amount, whereas the intake air amount for the other cylinders is smaller than the standard amount. The air-fuel ratio is leaner than the stoichiometric air-fuel ratio in the former cylinders and richer than the stoichiometric air-fuel ratio in the latter cylinders.

When the fuel injection amount varies as described above in a cylinder in which the intake air amount is excessive (hereinafter referred to as a lean cylinder), the in-cylinder air-fuel ratio, torque, and rotation speed vary as indicated in Fig. 3. The in-cylinder air-fuel ratio periodically changes to the lean side and rich side through the stoichiometric region. When the in-cylinder air-fuel ratio is lean, the torque's sensitivity to the air-fuel ratio is high. However, when the in-cylinder air-fuel ratio is rich, the torque's sensitivity to the air-fuel ratio is low. Therefore, when the in-cylinder air-fuel ratio is rich, the torque remains substantially constant in a lean cylinder. When the in-cylinder air-fuel ratio is lean, the torque decreases in accordance with the degree of leanness. Consequently, the torque of the lean cylinder varies in the same cycle as the in-cylinder air-fuel ratio. In an idle state in which the rotation speed varies with the torque, the rotation speed varies in the same manner as the torque. The torque's vibration amplitude ΔT and the rotation speed's vibration amplitude ΔNe, which are shown in Fig. 3, increase with an increase in the degree of leanness of the in-cylinder air-fuel ratio prevailing during a stoichiometric operation.

When the fuel injection amount varies as described above in a cylinder in which the intake air amount is insufficient (hereinafter referred to as a rich cylinder), the in-cylinder air-fuel ratio, torque, and rotation speed vary as indicated in Fig. 4. The in-cylinder air-fuel ratio periodically changes within a region that is richer than the stoichiometric air-fuel ratio. However, when the in-cylinder air-fuel ratio is rich, the torque's sensitivity to the air-fuel ratio is low. Therefore, the torque remains substantially constant in a rich cylinder irrespective of in-cylinder air-fuel ratio changes. In an idle state, the rotation speed also remains substantially constant as is the case with the torque.

As such being the case, when the fuel injection amount is periodically increased from the injection amount for stoichiometric operation to monitor the resulting changes in the torque or rotation speed, it is possible to detect a cylinder in which the intake air amount is excessive. If there is a cylinder in which the intake air amount is excessive, the torque and rotation speed periodically change. If there is a cylinder in which the intake air amount is excessive, there is always a cylinder in which the intake air amount is insufficient. Therefore, when the torque and rotation speed periodically change, it means that the intake air amount varies among the cylinders.

The more excessive the intake air amount in a lean cylinder, the greater the vibration amplitudes of the torque and rotation speed. The more excessive the intake air amount in a lean cylinder, the more insufficient the intake air amount in a rich cylinder. In other words, the intake air amount greatly varies among the cylinders. Therefore, the degree of intake air amount variations among the cylinders can be accurately determined by monitoring the changes in the torque or rotation speed and measuring its vibration amplitude.

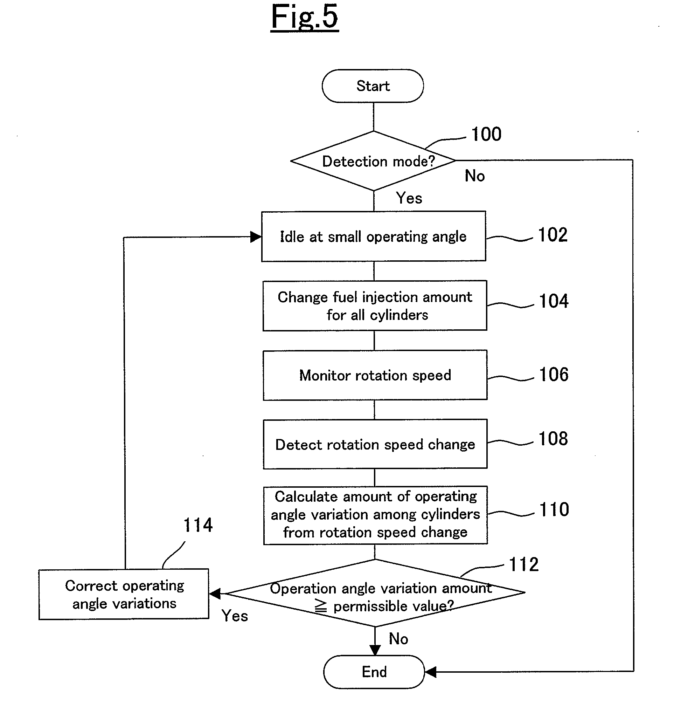

The process performed by the ECU 30 will now be described. Fig. 5 is a flowchart illustrating a routine that is executed by the ECU 30. In accordance with aforementioned basic idea, the routine detects operating angle and lift amount variations of the intake valve 12, and judges according to the detection result whether the operating angle and lift amount need to be corrected.

The routine shown in Fig. 5 first performs step 100 to judge whether a detection mode for detecting variations of the operating angle and lift amount (hereinafter simply referred to as the operating angle) is selected as a control mode for the internal combustion engine 2. During a vehicle operation, the detection mode is automatically selected on a periodic basis whenever, for instance, the vehicle travels a predetermined distance. The detection mode can also be selected as a diagnostic mode for an internal combustion engine test run or maintenance.

If the detection mode is selected, the ECU 30 issues an instruction signal to the actuator 22 to operate the variable valve device 16 for each cylinder and set a small operating angle for the intake valve 12 for each cylinder. When the small operating angle is set as the operating angle, the lift amount for the intake valve 12 is changed to a small lift amount in accordance with the operating angle. The intake valve 12 is set at a small operating angle as described above because the influence of operating angle variations upon intake air amount variations becomes greater when the operating angle decreases. In other words, it is easier to detect operating angle variations. The internal combustion engine 2 idles while the intake valve 12 is set at the small operating angle (step 102).

In the next step (step 104), the amount of fuel injection from the injector 18 is periodically increased from the injection amount for stoichiometric operation. This fuel injection amount change is not applied to a particular cylinder but is applied uniformly to all cylinders. The fuel injection amount change frequency is set so that it is outside the range of human perception. This frequency setup operation is performed to ensure that the torque and rotation speed changes resulting from fuel injection amount changes do not make vehicle occupants feel uncomfortable when the detection mode is executed during a vehicle operation.

After the fuel injection amount is periodically changed, the resulting rotation speed is monitored (step 106). The rotation speed of the internal combustion engine 2 (number of rotations per unit time) is acquired by processing a crank angle signal that is fed from the crank angle sensor 34. The monitored rotation speed is buffered in a memory.

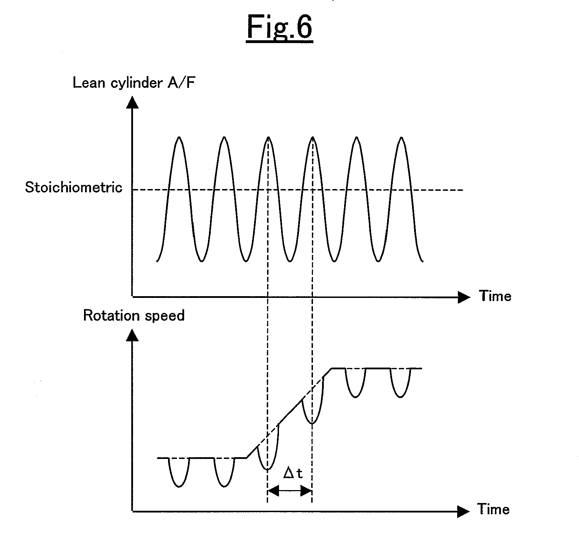

When the rotation speed has been monitored for a predetermined period of time, the buffered rotation speed data is subjected to FFT or like filtering so as to extract a change component having the same frequency as the fuel injection amount change frequency (step 108). Even when the rotation speed is changed due, for instance, to a change in the air conditioner or other accessory load, this filtering process extracts a change component having the same cycle as the fuel injection amount change cycle Δt as indicated in Fig. 6. This makes it possible to accurately extract a rotation speed change, which results from a change in the fuel injection amount, without being affected by disturbance.

In the next step (step 110), the rotation speed vibration amplitude is measured from a rotation speed change that was detected in step 108. As described earlier, the rotation speed vibration amplitude prevailing when the fuel injection amount is increased from the injection amount for stoichiometric operation relates to the amount of intake air amount variations among the cylinders. The larger the amount of intake air amount variations, the greater the rotation speed vibration amplitude. The intake air amount variations among the cylinders increase with an increase in the operating angle variations. In other words, the larger the amount of operating angle variations among the cylinders, the greater the rotation speed vibration amplitude. In step 110, the amount of operating angle variations among the cylinders is calculated by collating the measured rotation speed vibration amplitude with a prepared correspondence table.

Next, step 112 is performed to judge whether the amount of operating angle variations, which was calculated in step 110, is greater than a predetermined permissible value. The permissible value is predetermined in consideration of a measurement error and the influence of intake air amount variations upon torque changes and exhaust emission. If the amount of operating angle variations is smaller than the permissible value, it can be concluded that there are no problematic intake air amount variations at present. In such an instance, there is no need to correct the operating angle of the intake valve 12 for each cylinder. Therefore, the routine terminates without performing any special process.

If, on the other hand, the judgment result obtained in step 112 indicates that the amount of operating angle variations is not smaller than the permissible value, it can be concluded that there are significant intake air amount variations among the cylinders. In this instance, it is necessary to correct the operating angle of the intake valve 12. Therefore, the ECU 30 outputs a signal to notify the driver and maintenance personnel that there are operating angle variations (step 114). This signal is output until the operating angle of the intake valve 12 is properly corrected to eliminate the intake air amount variations among the cylinders.

The routine described above can accurately detect the intake air amount variations among the cylinders. When the operating angle (and lift amount) of the intake valve 12 are properly corrected in accordance with the detection result, the intake air amount variations among the cylinders can be promptly eliminated. The intake valve operating angle variations can be corrected by adjusting the mounting state of the variable valve device 16 on an individual cylinder basis. However, if the variable valve device 16 for each cylinder incorporates a function for automatically adjusting the operating angle of the intake valve 12, automatic adjustments may be made in accordance with the operating angle variation amount (or rotation speed change amount) calculated in step 110.

In the embodiment described above, the "injection amount control means" according to the first aspect of the present invention is implemented when the ECU 30 performs step 104; the "computation means" according to the first aspect of the present invention is implemented when the ECU 30 performs steps 106, 108, and 110; and the "output means" according to the first aspect of the present invention is implemented when the ECU 30 performs steps 112 and 114.

### Second Embodiment

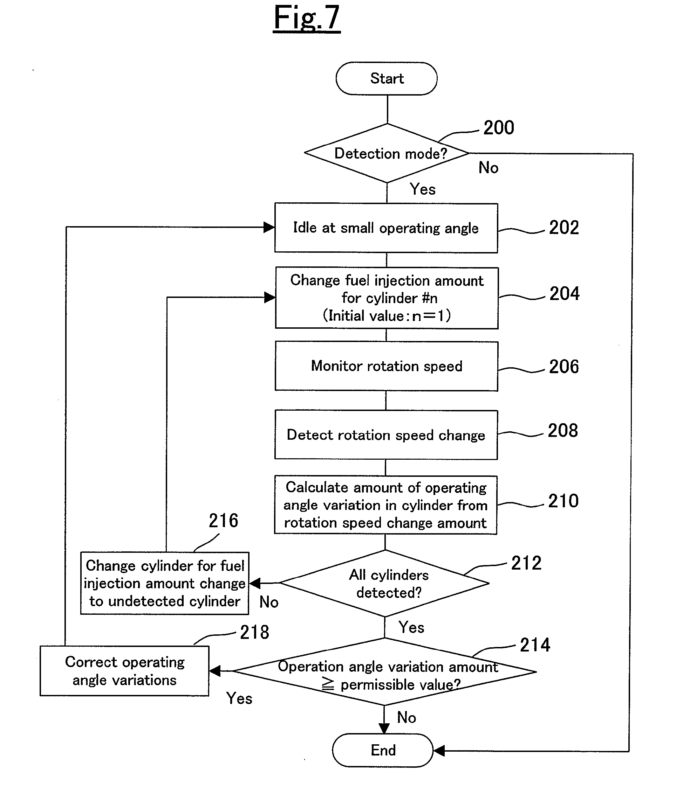

A second embodiment of the present invention will now be described with reference to Fig. 7.

The intake air amount variation detector according to the second embodiment can be implemented when the ECU 30 according to the first embodiment executes a routine shown in Fig. 7 instead of the routine shown in Fig. 5.

The first embodiment detects intake air amount variations among the cylinders. However, it does not identify cylinders having a large air intake amount or cylinders having a small air intake amount. When the operating angle and lift amount of the intake valve 12 for each cylinder are to be adjusted on an individual basis, it is preferred that the amount of intake air amount variation from a reference value be grasped on an individual cylinder basis. The intake air amount variation in each cylinder can be detected by controlling the fuel injection amount on an individual cylinder basis in accordance with the aforementioned basic idea. In other words, if the torque or rotation speed periodically changes when the fuel injection amount for a particular cylinder is periodically increased from the injection amount for stoichiometric operation, it can be concluded that the intake air amount for the particular cylinder is excessive. It can also be concluded that the greater the change amplitude of the rotation speed or the like, the greater the degree of intake air amount excessiveness. Therefore, the degree of intake air amount excessiveness can be grasped on an individual cylinder basis by monitoring torque or rotation speed changes that occur when the fuel injection amount is changed on an individual cylinder basis and measuring the resulting vibration amplitude.

Fig. 7 is a flowchart illustrating a routine that the ECU 30 executes in the present embodiment. In accordance with the aforementioned basic idea, this routine detects the operating angle and lift amount variations of the intake valve 12 on an individual cylinder basis. In accordance with the detection result, the routine judges whether the operating angle and lift amount need to be corrected.

The routine shown in Fig. 7 first performs step 200 to judge whether a detection mode for detecting variations of the operating angle and lift amount (hereinafter simply referred to as the operating angle) is currently selected as a control mode. If the detection mode is selected, step 202 is performed. In step 202, the ECU 30 issues an instruction signal to the actuator 22 in order to operate the variable valve device 16 for each cylinder and set the intake valve 12 for each cylinder at a predefined small operating angle. The internal combustion engine 2 then idles while the intake valve 12 is set at the small operating angle.

In the next step (step 204), only the fuel injection amount for a particular cylinder is periodically increased from the injection amount for stoichiometric operation. The injection amount for stoichiometric operation is the fuel injection amount for the particular cylinder that prevails when the fuel injection amount for each cylinder is adjusted until the overall air-fuel ratio of the internal combustion engine, that is, the average air-fuel ratio of all cylinders, is stoichiometric. The fuel injection amount change frequency prevailing in this instance is set so that it is outside the range of easy human perception. The fuel injection amount for cylinders other than the particular cylinder is maintained equal to the fuel injection amount for stoichiometric operation. When step 204 is performed for the first time, a first cylinder #1 is set as the particular cylinder.

When the fuel injection amount for the first cylinder #1 is periodically changed, the resulting rotation speed is monitored and buffered in a memory (step 206). When the rotation speed has been monitored for a predetermined period of time, the buffered rotation speed data is subjected to FFT or like filtering so as to extract a change component having the same frequency as the fuel injection amount change frequency (step 208).

In the next step (step 210), the rotation speed vibration amplitude is measured from a rotation speed change that was detected in step 208. The rotation speed vibration amplitude prevailing when the fuel injection amount for a particular cylinder is periodically increased from the injection amount for stoichiometric operation relates to the degree of intake air amount excessiveness relative to an intake air amount reference value for the particular cylinder (the intake air amount that provides a stoichiometric operation). The greater the degree of intake air amount excessiveness, the greater the rotation speed vibration amplitude. Further, the degree of intake air amount excessiveness increases when the operating angle for the particular cylinder becomes greater than the reference value. In other words, the greater the operating angle for the particular cylinder, the greater the rotation speed vibration amplitude. In step 210, the amount of operating angle variation in the particular cylinder is calculated by collating the measured rotation speed vibration amplitude with a prepared correspondence table.

Step 212 is performed to judge whether operating angle variations in all cylinders are detected. If there are some cylinders whose operating angle variation is still not detected, the flow proceeds to step 216. Step 216 is performed to change the particular cylinder that will be subjected to a fuel injection amount change. More specifically, if the current particular cylinder is cylinder #n, the particular cylinder is changed to cylinder #n+1. After completion of step 216, steps 204 to 212 are performed again. In step 204, only the fuel injection amount for the particular cylinder that was designated in step 216 is periodically increased from the injection amount for stoichiometric operation. The loop described above is repeatedly executed until the condition prescribed in step 212 is established subsequently to the detection of all cylinders.

If the condition prescribed in step 212 is established, step 214 is performed to formulate a judgment. In step 214, the amount of operating angle variations among the cylinders is calculated from the amount of operating angle variation in each cylinder, which was calculated when the above loop was executed. Step 214 is continued to judge whether a predetermined permissible value is exceeded by the calculated operating angle variation amount. If the operating angle variation amount is smaller than the permissible value, the routine terminates without performing any special process because it is not necessary to correct the intake valve operating angle for each cylinder.

If, on the other hand, the judgment result obtained in step 214 indicates that the operating angle variation amount is greater than the permissible value, it can be concluded that there are significant intake air amount variations among the cylinders. In this instance, it is necessary to correct the operating angle of the intake valve 12 on an individual cylinder basis. Therefore, the ECU 30 outputs a signal to notify the driver and maintenance personnel that there are operating angle variations (step 218). This signal contains information that indicates the amount of operating angle variation in each cylinder. The signal is output from the ECU 30 until the operating angle of the intake valve 12 is properly corrected on an individual cylinder basis to eliminate the intake air amount variations among the cylinders.

As is the case with the first embodiment, the routine described above can accurately detect the intake air amount variations among the cylinders. Further, the routine can also detect the amount of operating angle variation in each cylinder. More specifically, it can detect the amount of variation toward the great operating angle side, which provides an intake air amount that is excessive as compared to the reference value. Therefore, the present embodiment makes it possible to easily grasp the amount of intake valve operating angle (and lift amount) correction to be provided for each cylinder, and eliminate the intake air amount variations among the cylinders more promptly. Further, the present embodiment changes the fuel injection amount for only one of a plurality of cylinders in the detection mode. Consequently, the present embodiment is advantageous in that it lessens the influence upon exhaust emission by reducing the changes in the exhaust air-fuel ratio.

In the embodiment described above, the "injection amount control means" according to the fifth aspect of the present invention is implemented when the ECU 30 performs steps 204, 212, and 216; the "computation means" according to the fifth aspect of the present invention is implemented when the ECU 30 performs steps 206, 208, and 210; and the "output means" according to the fifth aspect of the present invention is implemented when the ECU 30 performs steps 214 and 218.

### Third Embodiment

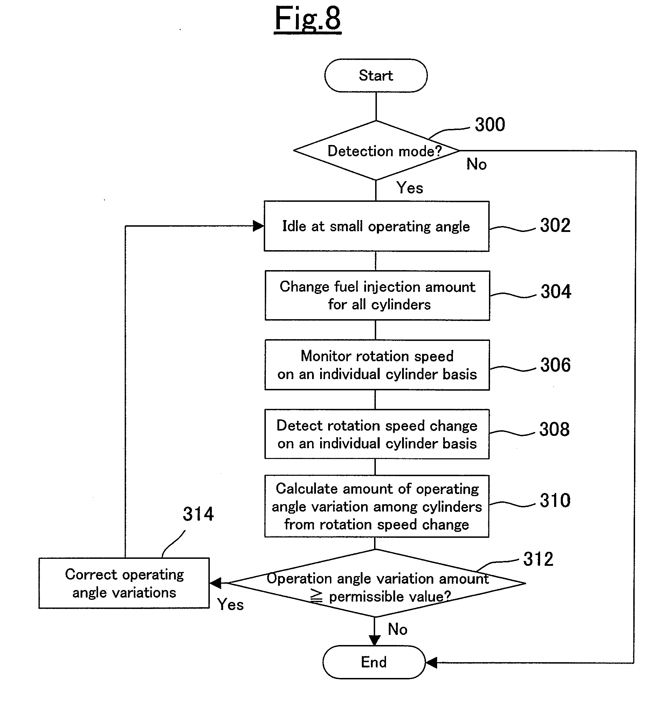

A third embodiment of the present invention will now be described with reference to Fig. 8.

The intake air amount variation detector according to the third embodiment can be implemented when the ECU 30 according to the first embodiment executes a routine shown in Fig. 8 instead of the routine shown in Fig. 5.

In the second embodiment, only the fuel injection amount for a particular one of a plurality of cylinders is changed to detect the intake air amount variation in the particular cylinder. However, combustion sequentially occurs in all cylinders. Therefore, the torque and rotation speed vary under the influence of the combustion state prevailing in a cylinder in which a combustion stroke is currently performed. Consequently, even when the fuel injection amounts for all the cylinders are varied in the same manner as is the case with the first embodiment, the degree of intake air amount variation in each cylinder can be grasped by monitoring the torque and rotation speed changes in each cylinder during a cylinder combustion stroke and measuring its vibration amplitude.

Fig. 8 is a flowchart illustrating a routine that the ECU 30 executes in the present embodiment. In accordance with the aforementioned basic idea, this routine detects the operating angle and lift amount variations of the intake valve 12 on an individual cylinder basis. In accordance with the detection result, the routine judges whether the operating angle and lift amount need to be corrected.

The routine shown in Fig. 8 first performs step 300 to judge whether a detection mode for detecting variations of the operating angle and lift amount (hereinafter simply referred to as the operating angle) is currently selected as a control mode. If the detection mode is selected, step 302 is performed. In step 302, the ECU 30 issues an instruction signal to the actuator 22 in order to operate the variable valve device 16 for each cylinder and set the intake valve 12 for each cylinder at a predefined small operating angle. The internal combustion engine 2 then idles while the intake valve 12 is set at the small operating angle.

In the next step (step 304), the fuel injection amounts for all cylinders are periodically increased from the injection amount for stoichiometric operation. The fuel injection amount change frequency prevailing in this instance is set so that it is outside the range of easy human perception.

In the next step (step 306), the rotation speed prevailing when the fuel injection amount is periodically changed is monitored and buffered in a memory on an individual cylinder basis. The monitoring period is set so that the influence of combustion in a cylinder upon the rotation speed can be differentiated from the influence of combustion in the other cylinders upon the rotation speed during, for instance, the combustion stroke of each cylinder. When the rotation speed has been monitored for a predetermined period of time, the buffered rotation speed data is subjected to FFT or like filtering so as to extract a change component having the same frequency as the fuel injection amount change frequency on an individual cylinder basis (step 308).

In the next step (step 310), the rotation speed vibration amplitude is measured from a rotation speed change that was detected in step 308. The rotation speed vibration amplitude monitored on an individual cylinder basis when the fuel injection amount is periodically increased from the injection amount for stoichiometric operation relates to the degree of intake air amount excessiveness relative to an intake air amount reference value for each cylinder (the intake air amount that provides a stoichiometric operation). The greater the degree of intake air amount excessiveness, the greater the rotation speed vibration amplitude. Further, the degree of intake air amount variation increases when the operating angle for the particular cylinder becomes greater. In other words, when the operating angle for a cylinder becomes greater, the rotation speed vibration amplitude, which is monitored on an individual cylinder basis, increases. In step 310, the amount of operating angle variation in each cylinder is calculated by collating the monitored rotation speed vibration amplitude with a prepared correspondence table. Further, the amount of operating angle variations among the cylinders is calculated from the calculated amount of operating angle variation in each cylinder.

Next, step 312 is performed to judge whether the operating angle variation amount calculated in step 310 is greater than a predetermined permissible value. If the operating angle variation amount is smaller than the permissible value, the routine terminates without performing any special process because it is not necessary to correct the intake valve operating angle for each cylinder.

If, on the other hand, the judgment result obtained in step 312 indicates that the operating angle variation amount is greater than the permissible value, it can be concluded that there are significant intake air amount variations among the cylinders. In this instance, it is necessary to correct the operating angle of the intake valve 12 on an individual cylinder basis. Therefore, the ECU 30 outputs a signal to notify the driver and maintenance personnel that there are operating angle variations (step 314). This signal contains information that indicates the amount of operating angle variation in each cylinder. The signal is output from the ECU 30 until the operating angle of the intake valve 12 is properly corrected on an individual cylinder basis to eliminate the intake air amount variations among the cylinders.

The routine described above can accurately detect the intake air amount variations among the cylinders. Further, the routine can also detect the amount of variation toward the great operating angle side on an individual cylinder basis, which provides an intake air amount that is excessive as compared to the reference value. Therefore, as is the case with the second embodiment, the present embodiment makes it possible to easily grasp the amount of intake valve operating angle (and lift amount) correction to be provided for each cylinder, and eliminate the intake air amount variations among the cylinders promptly.

In the embodiment described above, the "injection amount control means" according to the ninth aspect of the present invention is implemented when the ECU 30 performs step 304; the "computation means" according to the ninth aspect of the present invention is implemented when the ECU 30 performs steps 306, 308, and 310; and the "output means" according to the ninth aspect of the present invention is implemented when the ECU 30 performs steps 312 and 314.

### Fourth Embodiment

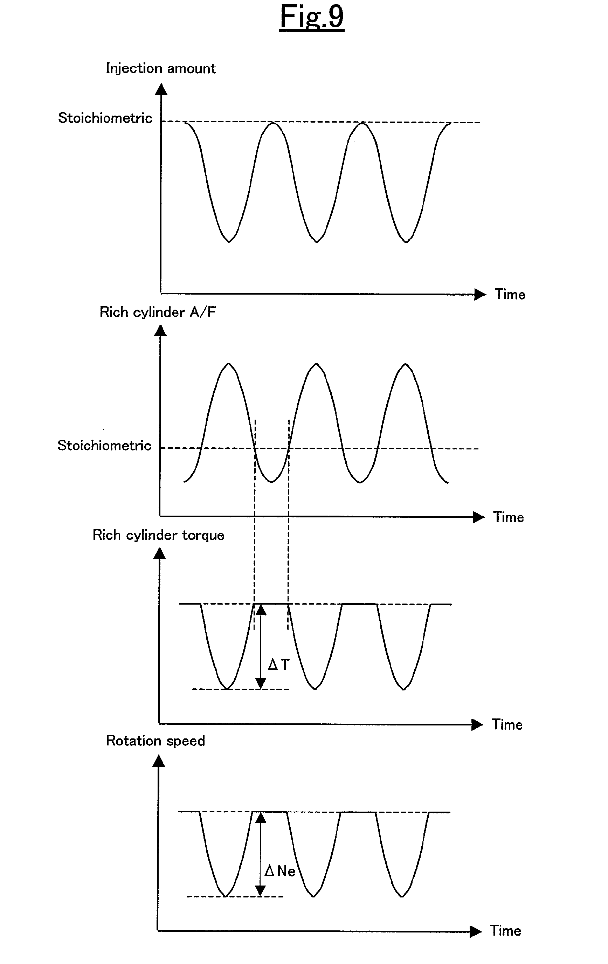

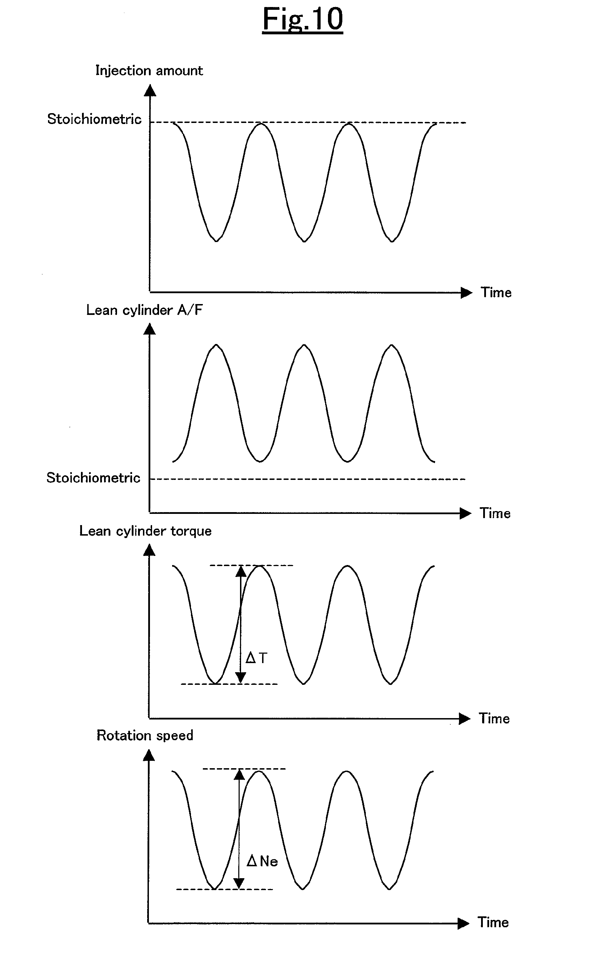

A fourth embodiment of the present invention will now be described with reference to Figs. 9 and 10.

The intake air amount variation detector according to the fourth embodiment of the present invention can be implemented when the ECU 30 detects the operating angle and lift amount variations of the intake valve 12 on the basis of the basic idea of intake air amount variation detection that will be described with reference to Figs. 9 and 10 instead of the basic idea described with reference to Figs. 3 and 4.

The basic idea of intake air amount variation detection will now be described with reference to Figs. 9 and 10. Figs. 9 and 10 illustrate in-cylinder air-fuel ratio, torque, and rotation speed changes that occur when the fuel injection amount is periodically decreased from the injection amount for stoichiometric operation in an idle state.

When the fuel injection amount is changed as described above in a cylinder (rich cylinder) in which the intake air amount is insufficient, the in-cylinder air-fuel ratio, torque, and rotation speed change as indicated in Fig. 9. The in-cylinder air-fuel ratio periodically changes to the rich side and lean side through the stoichiometric region. As described with reference to Fig. 2, the torque's sensitivity to the air-fuel ratio is low when the in-cylinder air-fuel ratio is rich. However, when the in-cylinder air-fuel ratio is lean, the torque's sensitivity to the air-fuel ratio is high. Therefore, when the in-cylinder air-fuel ratio is rich, the torque remains substantially constant in a rich cylinder. When the in-cylinder air-fuel ratio is lean, the torque decreases in accordance with the degree of leanness. The rotation speed also changes in like manner. The torque's vibration amplitude ΔT and the rotation speed's vibration amplitude ΔNe, which are shown in Fig. 9, decrease with an increase in the degree of leanness of the in-cylinder air-fuel ratio prevailing during a stoichiometric operation.

On the other hand, when the fuel injection amount is changed as described above in a cylinder (lean cylinder) in which the intake air amount is excessive, the in-cylinder air-fuel ratio, torque, and rotation speed change as indicated in Fig. 10. The in-cylinder air-fuel ratio periodically changes within a region that is leaner than the stoichiometric air-fuel ratio. When the in-cylinder air-fuel ratio is lean, the torque's sensitivity to the air-fuel ratio is high. Therefore, the torque and rotation speed periodically change as indicated by waveforms that are substantially the same as the waveform for the in-cylinder air-fuel ratio. In this instance, the torque's vibration amplitude ΔT and the rotation speed's vibration amplitude ΔNe are substantially maximized, and substantially fixed irrespective of the degree of in-cylinder air-fuel ratio leanness during a stoichiometric operation.

Consequently, when the fuel injection amount is periodically decreased from the injection amount for stoichiometric operation to monitor the resulting torque or rotation speed changes, it is possible to detect the existence of a cylinder in which the intake air amount is insufficient. In other words, if there is a cylinder in which the intake air amount is insufficient, the torque and rotation speed vibration amplitudes are smaller than those prevailing when the intake air amount is proper in all cylinders. Further, if the intake air amount is insufficient in any cylinder, there is always a certain other cylinder in which the intake air amount is excessive. Therefore, a vibration amplitude decrease in the torque or rotation speed indicates that there are intake air amount variations among the cylinders.

The greater the degree of intake air amount insufficiency in a rich cylinder, the smaller the torque and rotation speed vibration amplitudes. If the intake air amount in a rich cylinder is significantly insufficient, it can be said that the intake air amount in a lean cylinder is significantly excessive. In other words, it can be said that the intake air amount variations among the cylinders are great. Therefore, the degree of intake air amount variations among the cylinders can be accurately determined by monitoring the changes in the torque or rotation speed and measuring its vibration amplitude.

The routine for detecting operating angle and lift amount variations of the intake valve 12 in accordance with the aforementioned basic idea can be explained with the flowchart in Fig. 5 as is the case with the first embodiment. Step 100 is performed first to judge whether the detection mode is selected. In the next step (step 102), the internal combustion engine 2 idles while the intake valve 12 for each cylinder is set at the small operating angle.

In the next step (step 104), the amount of fuel injection from the injector 18 is periodically decreased from the injection amount for stoichiometric operation. When the fuel injection amount is periodically changed, step 106 is performed so that the resulting rotation speed is monitored and buffered in a memory. Next, step 108 is performed to extract a change component having the same frequency as the fuel injection amount change frequency from the buffered rotation speed data.

In the next step (step 110), the rotation speed vibration amplitude is measured from the rotation speed change detected in step 108. The rotation speed vibration amplitude prevailing when the fuel injection amount is periodically decreased from the injection amount for stoichiometric operation decreases with an increase in the amount of intake air amount variations among the cylinders. The degree of intake air amount variations among the cylinders increase with an increase in the degree of operating angle variations. In other words, the larger the amount of operating angle variations among the cylinders, the smaller the rotation speed vibration amplitude. In step 110, the amount of operating angle variations among the cylinders is calculated by collating the measured rotation speed vibration amplitude with a prepared correspondence table.

Next, step 112 is performed to judge whether the operating angle variation amount calculated in step 110 is greater than a predetermined permissible value. If the operating angle variation amount is not smaller than the permissible value, a signal is output to indicate that there are operating angle variations (step 114). When the operating angle (and lift amount) of the intake valve 12 are corrected for each cylinder in accordance with the output signal, the intake air amount variations among the cylinders can be promptly eliminated.

The idea of intake air amount variation detection according to the present embodiment that has been described with reference to Figs. 9 and 10 can also be applied to intake valve operating angle/lift amount variation detection according to the second or third embodiment. In such an instance, it is possible to detect the amount of operating angle variation toward the small operating angle side from the reference operating angle value on an individual cylinder basis, as summarized below.

When the idea of intake air amount variation detection according to the present embodiment is applied to variation detection according to the second embodiment, the fuel injection amount for a particular cylinder is periodically decreased from the injection amount for stoichiometric operation to measure the resulting rotation speed vibration amplitude. The measured rotation speed vibration amplitude relates to the amount of intake air amount decrease in the particular cylinder from the reference value. The larger the amount of intake air amount decrease (the degree of intake air amount insufficiency), the smaller the rotation speed vibration amplitude. The degree of intake air amount insufficiency increases with an increase in the amount of operating angle decrease in the particular cylinder from the reference value. In other words, the larger the amount of operating angle variation toward the small operating angle side, the smaller the rotation speed vibration amplitude. Therefore, the amount of operating angle variation toward the small operating angle side in the particular cylinder can be determined by collating the measured rotation speed vibration amplitude with a prepared correspondence table.

When the idea of intake air amount variation detection according to the present embodiment is applied to variation detection according to the third embodiment, the fuel injection amounts for all cylinders are periodically decreased from the injection amount for stoichiometric operation to measure the resulting rotation speed vibration amplitude on an individual cylinder basis. The rotation speed vibration amplitude measured on an individual cylinder basis relates to the amount of intake air amount decrease in an individual cylinder from the reference value. The larger the amount of intake air amount decrease (the degree of intake air amount insufficiency), the smaller the rotation speed vibration amplitude. The degree of intake air amount insufficiency increases with an increase in the amount of operating angle decrease in an individual cylinder from the reference value. In other words, the larger the amount of operating angle variation toward the small operating angle side, the smaller the rotation speed vibration amplitude. Therefore, the amount of operating angle variation toward the small operating angle side in an individual cylinder can be determined by collating the measured rotation speed vibration amplitude of each cylinder with a prepared correspondence table.

### Fifth Embodiment

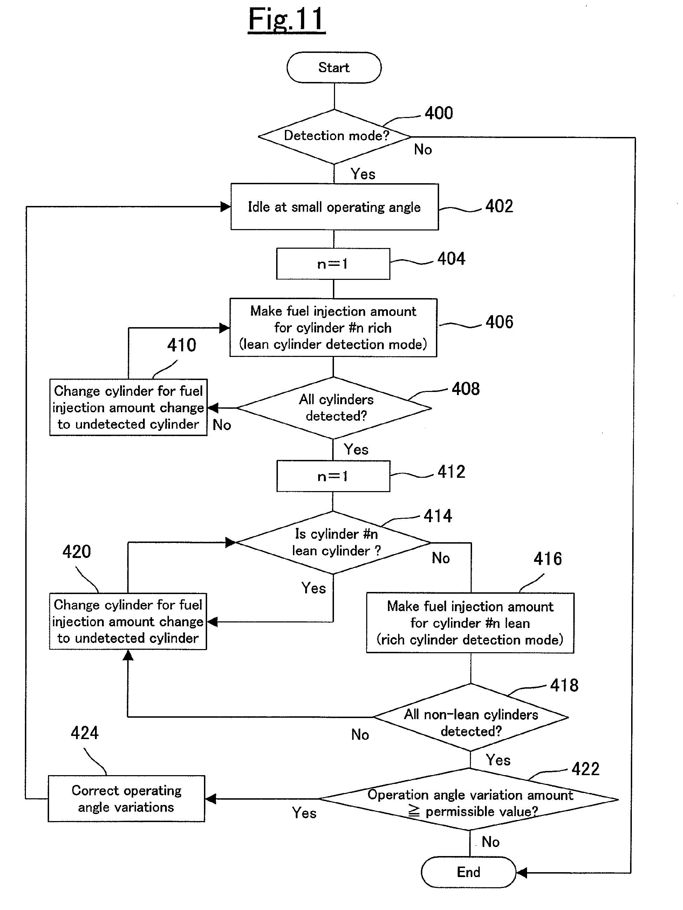

A fifth embodiment of the present invention will now be described with reference to Fig. 11.

The intake air amount variation detector according to the fifth embodiment can be implemented when the ECU 30 according to the first embodiment executes a routine shown in Fig. 11 instead of the routine shown in Fig. 5.

When the variation detection function according to the second or third embodiment is exercised, the amount of operating angle variation toward the great operating angle side from the reference value can be detected on an individual cylinder basis. Further, when the idea of intake air amount variation detection according to the fourth embodiment that has been described with reference to Figs. 9 and 10 is applied to variation detection according to the second or third embodiment, the amount of operating angle variation toward the small operating angle side from the reference value can be detected on an individual cylinder basis. Therefore, when the above two methods are combined, it is conceivable that the amount of operating angle variation can be detected on an individual cylinder basis no matter whether the operating angle variation from the reference value is toward the great operating angle side or small operating angle side.

When, for instance, the variation detection method according to the second embodiment is applied, the fuel injection amount for a particular cylinder is periodically increased from the injection amount for stoichiometric operation, and then periodically decreased from the injection amount for stoichiometric operation. The use of this method makes it possible to accurately detect the amount of operating angle variation in the particular cylinder no matter whether the operating angle variation from the reference value is toward the great operating angle side or small operating angle side. As a result, when the operating angle (and lift amount) of the intake valve 12 are to be corrected on an individual cylinder basis, the amount of such correction can be determined with increased accuracy.

When the variation detection method according to the third embodiment is applied, the fuel injection amount is periodically increased from the injection amount for stoichiometric operation to monitor the rotation speed on an individual cylinder basis. Next, the fuel injection amount is periodically decreased from the injection amount for stoichiometric operation to monitor the rotation speed on an individual cylinder basis. The use of this method makes it possible to detect the presence of both rich cylinders and lean cylinders, and accurately detect the amount of operating angle variation in each cylinder no matter whether the operating angle variation is toward the great operating angle side or small operating angle side.

When the fuel injection amount is decreased from the injection amount for stoichiometric operation, the in-cylinder air-fuel ratio becomes leaner in a lean cylinder in which the intake air amount has been excessive, as indicated in Fig. 10. For the air-fuel ratio, there is a combustibility range within which the fuel can be normally burned. Therefore, if the air-fuel ratio in a cylinder is excessively lean, such a lean cylinder may incur a misfire. Consequently, it is necessary to vary the fuel injection amount in such a manner that the air-fuel ratio in a lean cylinder does not exceed the lean-side limit of the combustibility range (lean limit). However, if the amount of a decrease in the fuel injection amount is reduced, a rich cylinder in which the intake air amount is insufficient may not accurately be detected.

To accurately detect a rich cylinder without causing a misfire in a lean cylinder, it is necessary that only the fuel injection amounts for non-lean cylinders be decreased from the injection amount for stoichiometric operation. More specifically, it is necessary to achieve lean cylinder detection before rich cylinder detection, and then examine non-lean cylinders on an individual basis to detect a rich cylinder. The use of the above method eliminates the necessity for reducing the amount of a decrease in the fuel injection amount and makes it possible to accurately detect a rich cylinder.

Fig. 11 is a flowchart illustrating a routine that the ECU 30 executes in the present embodiment. The routine first detects intake air amount excessiveness on an individual cylinder basis as described earlier, and then checks cylinders other than lean cylinders, in which the intake air amount is excessive, for intake air amount insufficiency on an individual cylinder basis. The obtained result is then used to judge whether it is necessary to correct the operating angle and lift amount.

In the routine shown in Fig. 11, the first step (step 400) is performed to judge whether a detection mode for detecting variations of the operating angle and lift amount (hereinafter simply referred to as the operating angle) is currently selected as a control mode. If the detection mode is selected, step 402 is performed. In step 402, the ECU 30 issues an instruction signal to the actuator 22 in order to operate the variable valve device 16 for each cylinder and set the intake valve 12 for each cylinder at a predefined small operating angle. The internal combustion engine 2 then idles while the intake valve 12 is set at the small operating angle.

Next, step 404 is performed to initialize a counter n (n = 1). The counter n indicates the cylinder number of a particular cylinder in which the fuel injection amount is to be periodically varied. As is the case with the second embodiment, the present embodiment monitors torque or rotation speed changes that occur when the fuel injection amount is changed on an individual cylinder basis, and measures the resulting vibration amplitude to determine the degree of intake air amount variation on an individual cylinder basis.

In step 406, only the fuel injection amount for a particular cylinder (nth cylinder) is periodically increased from the injection amount for stoichiometric operation. The resulting torque or rotation speed changes are then monitored. The vibration amplitude obtained as a result of monitoring is used to calculate the amount of operating angle variation toward the great operating angle side in the particular cylinder. The details of the process performed in step 406 are the same as those of the process performed in steps 204 to 210 of the routine shown in Fig. 7.

Step 408 is performed to judge whether a great operating angle is detected in all cylinders. If any cylinder is left undetected, the flow proceeds to step 410. Step 410 is performed so that the cylinder to be subjected to a fuel injection amount change is changed from the nth cylinder to the n+1th cylinder. After completion of step 408, step 406 is performed again. In step 406, only the fuel injection amount for the cylinder selected in step 410 is periodically increased from the injection amount for stoichiometric operation. The loop described above is repeatedly executed until the condition prescribed in step 408 is established subsequently to the detection of all cylinders.

After the condition prescribed in step 408 is established, step 412 is performed to initialize the counter n again (n = 1). Next, step 414 is performed to judge whether the currently selected cylinder (first cylinder) is a lean cylinder in which the intake air amount is excessive, that is, a great operating angle cylinder in which the operating angle is great. Whether or not the first cylinder is a lean cylinder is determined in accordance with the detection result obtained in step 406. If the obtained judgment result indicates that the first cylinder is a lean cylinder, the flow proceeds to step 420. Step 420 is performed so that the selected cylinder is changed from the first cylinder to the second cylinder. After the selected cylinder is changed, step 414 is performed again to judge whether the newly selected cylinder is a lean cylinder.

Step 416 is performed only when the judgment result obtained in step 414 does not indicate that the selected cylinder (nth cylinder) is a lean cylinder. In step 416, only the fuel injection amount for the selected cylinder is periodically decreased from the injection amount for stoichiometric operation. Further, the resulting torque or rotation speed change is monitored to determine its vibration amplitude. The vibration amplitude is then collated with a prepared correspondence table to calculate the amount of operating angle variation toward the small operating angle side.

Step 416 is performed to judge whether the operating angles in all non-lean cylinders are small. If any cylinder is left undetected, the flow proceeds to step 420. In step 420, the cylinder to be subjected to a fuel injection amount change is changed to a cylinder having the next cylinder number. After completion of step 420, step 414 is performed to judge whether the currently selected cylinder is a lean cylinder. If the obtained judgment result indicates that the selected cylinder is a lean cylinder, the flow returns to step 420. In step 420, the selected cylinder is changed to a cylinder having the next cylinder number. Step 416 is performed only when the cylinder selected in step 420 is not found to be a lean cylinder. The loop described above is repeatedly executed until the condition prescribed in step 418 is established subsequently to the detection of all non-lean cylinders.

When the condition prescribed in step 418 is established, step 422 is performed for judgment purposes. In step 422, the amount of operating angle variations among the cylinders is calculated from the amount of operating angle variation toward the great operating angle side, which was calculated for each cylinder when the loop comprising steps 406, 408, and 410 was executed, and from the amount of operating angle variation toward the small operating angle side, which was calculated for each cylinder when the loop comprising steps 414, 416, 418, and 420 was executed. Further, the calculated operating angle variation amount is checked to determine whether it is greater than a predetermined permissible value. If the operating angle variation amount is smaller than the permissible value, the routine terminates without performing any special process because it is not necessary to correct the intake valve operating angle for each cylinder.

If, on the other hand, the judgment result obtained in step 422 indicates that the operating angle variation amount is not smaller than the permissible value, it can be concluded there are significant intake air amount variations among the cylinders. In this instance, it is necessary to correct the operating angle of the intake valve 12 on an individual cylinder basis. Therefore, the ECU 30 outputs a signal to notify the driver and maintenance personnel that there are operating angle variations (step 424). This signal contains information that indicates the amount of operating angle variation in each cylinder. The signal is output from the ECU 30 until the operating angle of the intake valve 12 is properly corrected on an individual cylinder basis to eliminate the intake air amount variations among the cylinders.

The routine described above can accurately detect the amount of operating angle variation toward the great operating angle side in a lean cylinder. Also, the routine can accurately detect the amount of operating angle variation toward the small operating angle side in a rich cylinder without incurring a misfire in the lean cylinder. Therefore, the present embodiment can determine, with increased accuracy, the amount of correction to be provided when the intake valve operating angle (and lift amount) are to be corrected on an individual cylinder basis, and eliminate the intake air amount variations among the cylinders more promptly.

In the embodiment described above, the "first injection amount control means" and "first computation means" according to the thirteenth aspect of the present invention is implemented when the ECU 30 performs step 406; the "second injection amount control means" and "second computation means" according to the thirteenth aspect of the present invention is implemented when the ECU 30 performs steps 414 and 416; and the "output means" according to the thirteenth aspect of the present invention is implemented when the ECU 30 performs steps 422 and 424.

### Other

While the present invention has been described in terms of preferred embodiments, it should be understood that the invention is not limited to the foregoing preferred embodiments, and that variations may be made without departure from the scope and spirit of the invention. For example, the following modifications may be made to the preferred embodiments of the present invention.

In the foregoing embodiments, the detection mode is executed while the internal combustion engine 2 idles. Alternatively, however, the detection mode may be executed during a partial-load operation. In such an instance, it is preferred that the torque changes be measured instead of the rotation speed changes to determine its vibration amplitude and detect the operating angle variations among the cylinders from the vibration amplitude. The torque generated by the internal combustion engine 2 can be calculated from the combustion pressure or from the angular velocity of the crankshaft 28 or determined by some other known method. The detection mode can be executed not only in a steady state in which the torque is substantially constant, but also in a transient state in which the torque varies. The reason is that when FFT or like filtering is performed as mentioned earlier, a change component having the same frequency as the fuel injection amount change frequency can be extracted from a torque change.

In the foregoing embodiments, the fuel injection amount is periodically increased or decreased from the injection amount for stoichiometric operation. Alternatively, however, the fuel injection amount may be temporarily increased or decreased. In such an instance, too, the torque and rotation speed of the internal combustion engine change in accordance with the intake air amount variations among the cylinders. Therefore, the intake air amount variations among the cylinders can be detected by measuring the amount of such a change.

In the foregoing embodiments, the present invention is applied to an internal combustion engine whose intake valve 12 includes the variable valve device 16. Alternatively, however, the present invention can be applied to an internal combustion engine that does not include the variable valve device 16. Even when the present invention is applied to an internal combustion engine without the variable valve device 16, it is possible to detect the intake air amount variations among the cylinders that are caused, for instance, by an intake valve mounting error. The intake air amount variations among the cylinders can be promptly eliminated by properly correcting the mounted intake valve 12 on an individual cylinder basis in accordance with the detection result. If each cylinder of the internal combustion engine includes an intake control valve, the intake control valve opening variations can be detected by allowing the present invention to detect the intake air amount variations.

## Claims

1. An intake air amount variation detector for detecting intake air amount variations among cylinders of a multiple-cylinder internal combustion engine, the device comprising:
injection amount control means for changing a fuel injection amount from an injection amount for stoichiometric operation to either an increased amount or a decreased amount;
computation means for determining the amount of a torque or rotation speed change that occurs when the fuel injection amount is changed by the injection amount control means; and
output means for outputting the torque or rotation speed change amount determined by the computation means as an index value that indicates the degree of intake air amount variations among the cylinders.

2. The intake air amount variation detector according to claim 1, further comprising:
comparison means for comparing a predetermined reference value with the amount of a change that occurs when the injection amount control means increases the fuel injection amount from the injection amount for stoichiometric operation; and
judgment means, which, when the amount of the change is greater than the reference value, judges that a permissible level is exceeded by the intake air amount variations among the cylinders.

3. The intake air amount variation detector according to claim 1, further comprising:
comparison means for comparing a predetermined reference value with the amount of a change that occurs when the injection amount control means decreases the fuel injection amount from the injection amount for stoichiometric operation; and
judgment means, which, when the amount of the change is smaller than the reference value, judges that a permissible level is exceeded by the intake air amount variations among the cylinders.

4. The intake air amount variation detector according to any one of claims 1 to 3, wherein the injection amount control means periodically increases or decreases the fuel injection amount from the injection amount for stoichiometric operation by a predetermined amount; and wherein the computation means extracts a change component having the same frequency as a fuel injection amount change frequency from a torque or rotation speed change, and determines the amplitude of the extracted change component as the amount of the change.

5. An intake air amount variation detector for detecting the intake air amount variations among cylinders of a multiple-cylinder internal combustion engine, the device comprising:
injection amount control means for changing a fuel injection amount for a particular one of the cylinders from an injection amount for stoichiometric operation to either an increased amount or a decreased amount;
computation means for determining the amount of a torque or rotation speed change that occurs when the fuel injection amount for the particular cylinder is changed by the injection amount control means; and
output means for outputting the torque or rotation speed change amount determined by the computation means as an index value that indicates the degree of intake air amount variation in the particular cylinder.

6. The intake air amount variation detector according to claim 5, further comprising:
comparison means for comparing a predetermined reference value with the amount of a change that occurs when the injection amount control means increases the fuel injection amount for the particular cylinder from the injection amount for stoichiometric operation; and
judgment means, which, when the amount of the change is greater than the reference value, judges that a permissible level is exceeded by an undue increase in the intake air amount in the particular cylinder.

7. The intake air amount variation detector according to claim 5, further comprising:
comparison means for comparing a predetermined reference value with the amount of a change that occurs when the injection amount control means decreases the fuel injection amount for the particular cylinder from the injection amount for stoichiometric operation; and
judgment means, which, when the amount of the change is smaller than the reference value, judges that a permissible level is exceeded by an undue decrease in the intake air amount in the particular cylinder.

8. The intake air amount variation detector according to any one of claims 5 to 7, wherein the injection amount control means periodically increases or decreases the fuel injection amount for the particular cylinder from the injection amount for stoichiometric operation by a predetermined amount; and wherein the computation means extracts a change component having the same frequency as a fuel injection amount change frequency for the particular cylinder from a torque or rotation speed change, and determines the amplitude of the extracted change component as the amount of the change.

9. An intake air amount variation detector for detecting the intake air amount variations among cylinders of a multiple-cylinder internal combustion engine, the device comprising:
injection amount control means for changing a fuel injection amount from an injection amount for stoichiometric operation to either an increased amount or a decreased amount;
computation means for determining, on an individual cylinder basis, the amount of a torque or rotation speed change that occurs when the fuel injection amount is changed by the injection amount control means; and
output means for outputting the torque or rotation speed change amount determined by the computation means as an index value that indicates the degree of intake air amount variation in an individual cylinder.

10. The intake air amount variation detector according to claim 9, further comprising:
comparison means for comparing, on an individual cylinder basis, a predetermined reference value with the amount of the change that occurs when the injection amount control means increases the fuel injection amount from the injection amount for stoichiometric operation; and
judgment means, which, when the amount of the change is greater than the reference value, judges that a permissible level is exceeded by an undue increase in the intake air amount in an individual cylinder.

11. The intake air amount variation detector according to claim 9, further comprising:
comparison means for comparing, on an individual cylinder basis, a predetermined reference value with the amount of the change that occurs when the injection amount control means decreases the fuel injection amount from the injection amount for stoichiometric operation; and
judgment means, which, when the amount of the change is smaller than the reference value, judges that a permissible level is exceeded by an undue decrease in the intake air amount in an individual cylinder.

12. The intake air amount variation detector according to any one of claims 9 to 11, wherein the injection amount control means periodically increases or decreases the fuel injection amount from the injection amount for stoichiometric operation by a predetermined amount; and wherein the computation means extracts a change component having the same frequency as a fuel injection amount change frequency from a torque or rotation speed change sampled on an individual cylinder basis, and determines the amplitude of the extracted change component as the amount of the change in an individual cylinder.

13. An intake air amount variation detector for detecting the intake air amount variations among cylinders of a multiple-cylinder internal combustion engine, the device comprising:
first injection amount control means for changing the fuel injection amount for a particular one of the cylinders from an injection amount for stoichiometric operation to an increased amount;
first computation means for determining the amount of a torque or rotation speed change that occurs when the fuel injection amount for the particular cylinder is changed by the first injection amount control means;
second injection amount control means, which, when the torque or rotation speed change amount determined by the first computation means is not greater than a predetermined reference value, decreases the fuel injection amount for the particular cylinder from the injection amount for stoichiometric operation;
second computation means for determining the amount of a torque or rotation speed change that occurs when the fuel injection amount for the particular cylinder is changed by the second injection amount control means; and
output means for outputting the torque or rotation speed change amount determined by the first computation means and the torque or rotation speed change amount determined by the second computation means as index values that indicate the degree of intake air amount variation in the particular cylinder.

14. The intake air amount variation detector according to any one of claims 4, 8, and 12, wherein the injection amount control means periodically changes the fuel injection amount at a frequency outside the range of human perception.

15. The intake air amount variation detector according to any one of claims 1 to 14, further comprising:
conversion means for converting the intake air amount variations among the cylinders to intake valve operating angle variations among the cylinders and/or intake valve lift amount variations among the cylinders.
